# EUROPEAN PATENT APPLICATION

(11) **EP 2 636 515 A1**
(43) Date of publication of application: **11.09.2013**
(21) Application number: 12158730.7
(22) Date of filing: 09.03.2012
(51) Int. Cl.: B29C 70/08, B29C 70/46, B32B 27/06, B60R 19/03

(54) **Composite material for lining of automotive parts, production method and use**

(71) Applicant: Quadrant Plastic Composites AG, 5600 Lenzburg (CH)
(72) Inventor: George, Joseph S., West Bloomfield, MI 48322 (US); Derengowski, Thomas M., Charlevoix, MI 49720 (US); Lefèvre, Jérôme, 8603 Schwerzenbach (CH)
(74) Representative: Schmauder & Partner AG Patent- & Markenanwälte VSP

(57) **Abstract**

The invention relates to a composite material for lining of automotive parts, comprising a carrier layer made of a porous, fiber reinforced polyolefin and a decorative skin made of a deep-drawable amorphous thermoplastic, preferably TPO.

## Description

The invention relates to a composite material comprising a carrier layer A made of a porous, fiber reinforced polyolefin A and a decorative skin B made of a deep-drawable amorphous thermoplastic, to the production of such composite material and to the use thereof for lining of automotive parts.

Automotive outer parts, particularly bumpers, are generally made of visually unattractive material, e.g. of steel, aluminum or glass-fiber reinforced polypropylene (GMT). These materials generally do not have sufficient elasticity to withstand collisions without damage. In particular, metals are not weather proof and not resistant to chemicals so that preferably such parts are lined with decorative materials. These are predominantly composite materials made of a compact inner layer and a decorative outer layer. The inner layer is usually an injection molded part made of a thermoplastic which comprises filler materials. A disadvantage of such parts is that they are relatively heavy-weight and also susceptible to cracking and shocks. Moreover, they have a relatively large thermal expansion.

For the lining of automotive inner parts, composite materials made of extruded polyolefin foamed plastics and decorative skins made of a blend of polypropylene and an EPDM rubber (so called thermoplastic olefin or TPO foils) have also been proposed. However, these composite materials have a poor rigidity and tear resistance. Moreover, they have too large a thermal expansion for lining of steel parts, so that they are only useful for the lining of automotive outer parts when used in combination with auxiliary materials.

Therefore, it was an object of the present invention to provide a composite material, especially for the lining of automotive outer parts which is free of the drawbacks mentioned above.

According to one aspect of the present invention, there is provided a composite material comprising the following layers:
A. a carrier layer made of a porous, fiber reinforced polyolefin with a thickness of 1 to 6 mm, and
B. a decorative skin made of a deep-drawable thermoplastic with a thickness of 0.5 to 5 mm.

The following amorphous thermoplastics can be used for layer B:
- a blend of a polyolefin and an EPDM rubber (TPO),
- an acrylonitrile butadiene styrene copolymer (ABS),
- a styrene acrylonitile copolymer (SAN),
- a polycarbonate (PC),
- polymethyl methacrylate (PMMA),
- a polyvinyl chloride (PVC)

The carrier layer A preferably consists of a polypropylene matrix containing 20 to 60 wt.-%, particularly 30 to 50 wt.-%, glass fibers that are homogeneously distributed in the matrix, with the latter having an air voids content of 20 to 80 vol.-%, preferably 30 to 60 vol.-%. Preferably, the thickness of carrier layer A is 2 to 4 mm. Such materials have been described, for example, in WO 2006/105 682 and can be purchased, e.g., as SYMALITE of Quadrant Plastic Composites AG, SEEBERLITE of Röchling Automotive AG, SUPERLITE of HanWha, and ACOUSTIMAX of Owens Corning Corp. The carrier layer A is comparatively rigid in spite of its low specific weight, and it is thermoplastically moldable.

The decorative skin B preferably consists of a blend of 95 to 50 wt.-%, particularly 90 to 70 wt.-% polypropylene and 5 to 50 wt.-%, particularly 10 to 30 wt.-% of an ethylene propylene diene monomer (EPDM) rubber. The thickness of the decorative skin or foil is preferably 1 to 4 mm. The raw material for this kind of decorative skin is sold under the designation TPO by the companies Mytex and Nobel Polymers. If compared with foils made of other amorphous thermoplastics, TPO foils are very elastic and thus return to their original state after deformation. Therefore, they are preferred for the purposes of the present invention.

The decorative skin B is characterized by a smooth surface; it can be dyed and thus can be adapted to an automobile's color.

The skin B can be coated with a protective film, for example based on a polyurethane or an acrylic resin, in order to impart scratch or weather resistance to the automotive part. The coating preferably is 5 to 100 µm thick; it can be applied to the skin B by spraying or calendering.

If the composite materials of the present invention shall have non-planar contours, they can be manufactured in a two-step or in a one-step process.

In the two-step process, a decorative skin is first formed by heating it up (for 30 to 240 sec at 180 to 200°C) and placing it into a mold half having the desired contours upon heating. This is preferably done by means of deep-drawing. Subsequently, the carrier layer which was heated up to the melting temperature of the polyolefin is draped over it. In the case of polypropylene, this happens in the range of 150 to 180°C. Thereafter, the mold is closed and the composite material is formed by pressing at a tool temperature of 40 to 90°C and an internal pressure of 1 to 5 bar. After cooling, the composite material thus formed is removed from the mold and cut so as to obtain the requisite boundary contours.

In the one-step process, there are two possibilities. According to the first method the two layers are heated up separately and then inserted into the mold on top of each other. The optimum heater temperature for the decorative skin is 180 to 200°C for TPO and 150 to 180°C for the carrier layer. According to the second method a laminate of the carrier layer and the decorative skin is first formed and the two sides thereof are then heated to the respective optimum temperature, e.g. by means of infrared radiation. In both methods the foils are placed into a mold heated to preferably about 60 to 100°C and pressed together.

If a simple planar composite material shall be produced it is sufficient to merely heat up the decorative skin to its softening temperature, place the same on the lower half of a flat compression mold, place the carrier layer onto it and press the parts together to form a composite.

It is important that the mold half which will come into contact with the decorative skin have a neatly polished surface so that the decorative skin of the composite material obtains a high-gloss surface. For this purpose, the surface of the mold may also be chromium plated.

The composite materials of the present invention can be used advantageously for lining of automotive outer parts, in particular of bumpers, but also of engine hoods, walls of campmobiles, luggage trunk lids, fuel tank caps and maintenance lids. In principle, automotive inner parts can also be lined therewith.

The materials of this invention, which have relatively good dimensional stability, can be mounted on automotive parts, for example by bolting together, clipping, sliding onto or gluing.

The composite materials stand out for their gloss and coloring, but also for their low weight, rigidity, resistance against cracking and shock, their weather and chemical resistance as well as for their acoustic and thermal insulation.

## Claims

1. A composite material, comprising:
A. a carrier layer made of a porous, fiber reinforced polyolefin with a thickness of 1 to 6 mm, and
B. a decorative skin made of a deep-drawable, amorphous thermoplastic with a thickness of 0.5 to 5 mm.

2. The composite material according to claim 1, wherein said carrier layer A essentially consists of a polypropylene matrix containing 20 to 60 wt.-% glass fibers and having an air voids content of 20 to 80 vol.-%.

3. The composite material according to claim 1, wherein said decorative skin B essentially consists of a blend of 95 to 50 wt.-% polypropylene and 5 to 50 wt.-% EPDM rubber.

4. The composite material according to claim 1, wherein said decorative skin B is dyed.

5. The composite material according to claim 1, wherein said decorative skin B is coated with a protective film.

6. A method for producing a contoured part of the composite material according to claim 1, wherein the decorative skin is laid out in a first mold half, the carrier layer which was heated up to the melting temperature of the polyolefin is draped over said decorative skin, the mold is closed and the composite material is formed by pressing.

7. The method according to claim 6, wherein the mold half that will come into contact with the decorative skin has a neatly polished surface.

8. A method for producing a contoured part of a composite material comprising:
A. a carrier layer made of a porous, fiber reinforced polyolefin with a thickness of 1 to 6 mm, and
B. a decorative skin made of a deep-drawable, amorphous thermoplastic with a thickness of 0.5 to 5 mm,
in which method the carrier layer is heated up to the melting temperature of the polyolefin and the decorative skin is heated up to the softening temperature of the thermoplastic, after which the heated carrier layer and decorative skin are inserted in a mold and bonded with each other by pressing.

9. The method according to claim 8, wherein the mold half that will come into contact with the decorative skin has a neatly polished surface.

10. A method for producing a planar part of a composite material comprising:
A. a carrier layer made of a porous, fiber reinforced polyolefin with a thickness of 1 to 6 mm, and
B. a decorative skin made of a deep-drawable, amorphous thermoplastic with a thickness of 0.5 to 5 mm,
in which method the decorative skin is heated up to its softening temperature and laid on the lower half of a flat compression mold, the carrier layer is laid onto said decorative skin and the composite material is formed by pressing.

11. The method according to claim 10, wherein the mold half that will come into contact with the decorative skin has a neatly polished surface.

12. A method of using a composite material comprising:
A. a carrier layer made of a porous, fiber reinforced polyolefin with a thickness of 1 to 6 mm, and
B. a decorative skin made of a deep-drawable, amorphous thermoplastic with a thickness of 0.5 to 5 mm,
as a lining of an automotive outer part, in which method a part made of said composite material is mounted on said automotive outer part.

13. A method of using a composite material comprising:
A. a carrier layer made of a porous, fiber reinforced polyolefin with a thickness of 1 to 6 mm, and
B. a decorative skin made of a deep-drawable, amorphous thermoplastic with a thickness of 0.5 to 5 mm,
as a lining of an automotive bumper, in which method a part made of said composite material is mounted on said automotive bumper.
